# EUROPÄISCHE PATENTSCHRIFT

(11) **EP 0 829 046 B1**
(45) Veröffentlichungstag und Bekanntmachung des Hinweises auf die Patenterteilung: **29.09.1999**
(21) Anmeldenummer: 96917437.4
(22) Anmeldetag: 28.05.1996
(51) Int. Cl.: G06F 9/445, G06F 15/16

(54) **SETUP-VERFAHREN UND SETUP-SYSTEM FÜR BENUTZERPROGRAMME, SOWIE BENUTZERRECHNER IN EINEM RECHNERNETZ**
METHOD AND SYSTEM FOR SETTING UP USER PROGRAMS AS WELL AS USER COMPUTER IN A COMPUTER NET
METHODE ET SYSTEME D'ACTUALISATION DES PROGRAMMES-UTILISATEURS AINSI QUE DES ORDINATEURS UTILISATEURS DANS UN RESEAU D'ORDINATEURS

(30) Priorität: 29.05.1995 EP 95108193
(43) Veröffentlichungstag der Anmeldung: 18.03.1998
(73) Patentinhaber: SIEMENS AKTIENGESELLSCHAFT, 80333 München (DE)
(72) Erfinder: GINTER, Thomas, D-81477 München (DE)
(86) Internationale Anmeldenummer: EP9602266
(87) Internationale Veröffentlichungsnummer: WO9638785

(56) Entgegenhaltungen:
- USENIX ASSOCIATION SUMMER CONFERENCE PROCEEDINGS, 9.Juni 1986, ATLANTA, GEORGIA, USA, Seiten 159-171, XP000576675 DANIEL NACHBAR:: "When Network File Systems Aren't Enough: Automatic Software Distribution Revisited"
- IBM TECHNICAL DISCLOSURE BULLETIN, Bd. 33, Nr. 3A, August 1990, NEW YORK, US, Seite 194 XP000123899 "CONFIGURING FILE SERVERS FROM HOSTS"

## Beschreibung

Bei Mehrbenutzer-Betriebssystemen, z.B. UNIX, HP-UX9.01, SUNOS, Domain-OS10.4, müssen beim Anmeldevorgang eines Benutzers an einem Computer (Rechner) ein oder mehrere Dateien (Files) abgearbeitet werden, um Einstellungen am Computer und/oder dessen Betriebssystem vorzunehmen, die das weitere Arbeiten eines Benutzers mit dessen Benutzerprogramm optimal gestalten bzw. die Nutzbarkeit des Benutzerprogramms optimal gestalten.

Jedes Benutzerprogramm benötigt also zur optimalen Nutzung spezielle Einstellungen des Computers, die in den genannten Files angegeben sind.

Die genannten speziellen Einstellungen werden zur Zeit durch folgenden Mechanismus realisiert:

In dem persönlichen Setup-File im Rechner eines Benutzers des Benutzerprogramms "Mentor" steht z.B. folgender Eintrag.
XX source/setup/mentor/cshrc
XX

Durch den obigen Eintrag wird bewirkt, daß z.B. der Suchpfad erweitert wird, Variablen für Lizenzfiles gesetzt werden sowie weitere Environment-Variablen, welche das weitere Verhalten des Benutzerprogramms "Mentor" steuern.

Die Direktory-Struktur von "/setup" in einem Benutzerrechner entspricht in etwa der folgenden Darstellung:

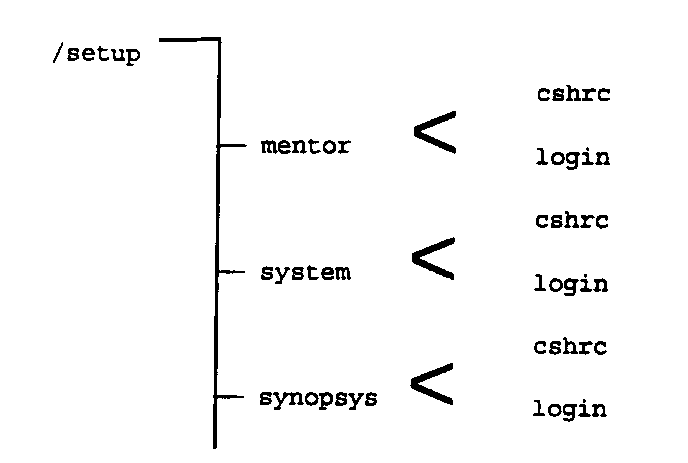

Bei dem genannten Setup-Mechanismus müssen alle Setup-Files immer lokal auf jedem Benutzerrechner vorhanden sein, um eine zuverlässige Funktion bzw. eine optimale Einstellung der Benutzerprogramme zu gewährleisten. Ist es nun erforderlich, Änderungen an den Setup-Files vorzunehmen (wenn beispielsweise ein Update eines Benutzerprogramms eingespielt wird und dieses Update neue Einstellungen oder veränderte Einstellungen erfordert), so müssen diese Änderungen auf allen Rechnern erfolgen.

Die Durchführung dieser Änderungen erfolgt bisher auf Zuruf und händisches Kopieren der Setup-Files. Dies bedeutet jedoch einen erheblichen administrativen Aufwand, insbesondere bei großen Netzwerken und vielen Benutzern bzw. Benutzerprogrammen.

Der Erfindung liegt die Aufgabe zugrunde, einen Setup-Mechanismus anzugeben, der es ermöglicht, den Setup-Vorgang für Benutzerprogramme mit sofortiger Wirkung für alle Benutzer des Netzwerkes zu verändern.

Diese Aufgabe wird durch einen Setup-Mechanismus mit den Merkmalen des Anspruchs 1 gelöst.

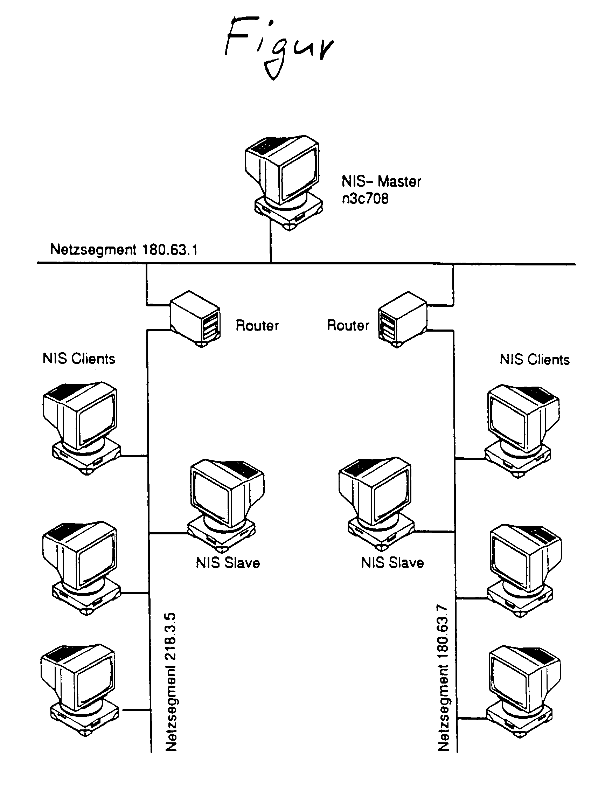

Im folgenden wird ein Ausführungsbeispiel der Erfindung anhand der Zeichnung näher erläutert.

Die Figur zeigt ein Rechnernetz mit angeschlossenen Rechnern, die in einer heterogenen Betriebssystemumgebung (SUN-OS; HP-UX; OSF1; Domain OS 10.4) laufen. Bei diesen Betriebssystemen werden rechnerwichtige Daten durch einen sogenannten Network-Information-Service, kurz NIS, verwaltet. Der NIS-Dienst unterteilt die Rechner des Netzes in drei Kategorien, nämlich einen NIS-Master-, NIS-Slave- und NIS-Benutzerrechner.

Der Masterrechner ist der zentrale Rechner, von dem aus rechnerwichtige Daten (z.B. Password, group, autouser...) an die Slaverechner verteilt werden können. Die zu verteilenden Daten können allein über den Masterrechner verändert werden.

Eine Beispiel für einen derartigen Verteilmechanismus ist z.B. aus dem Dokument USENIX ASSOCIATION SUMMER CONFERENCE PROCEEDINGS 9.Juni 1986, Atlanta, Georgia, USA, Seiten 159-171, DANIEL NACHBAR: "When Network File Systems Aren't Enough: Automatic Software Distribution Revisited" bekannt.

Der Slaverechner wird, wie bereits erwähnt, durch den Masterrechner mit aktuellen Daten aufdatiert und stellt diese Daten den Benutzerrechnern auf Anforderung zur Verfügung.

Die Benutzerrechner erfragen systemrelevante Daten jeweils von einem Slaverechner. Der Slaverechner muß dabei im lokalen Netzsegment vorhanden sein, da eine Anfrage über gateways, (in der Figur als "Router" bezeichnet) nicht möglich ist.

Sollte aus verschiedenen Gründen (Wartungsarbeiten, Absturz oder Crash) der Slaverechner ausfallen, so ist ein Zugriff auf die durch den NIS-Dienst verteilten Daten für alle Benutzerrechner im entsprechenden Netzsegment nicht mehr möglich. Damit ist aber gleichzeitig ein Arbeiten an den Benutzerrechnern nicht mehr möglich. Deshalb wird jedes Netzsegment mit mindestens zwei Slaverechnern betrieben, die sich bei Ausfall gegenseitig ersetzen.

Der erfindungsgemäße Setup-Mechanisimus arbeitet nach folgendem Prinzip:

Auf allen Slaverechnern wird folgende Direktory-Struktur erstellt:
/usr/setup

Jede Nacht wird die genannte Direktory-Struktur, die im folgenden auch als Master-Direktory bezeichnet wird, auf die Slaverechner kopiert.

Um Anwendern, z.B. Anwendern des Benutzerprogramms "Mentor", den Zugriff auf dieses Master-Direktory zu ermöglichen, muß in einem persönlichen Setup-File eines Anwenders (im Home-Direktory enthalten), z.B. dem Setup-File .cshrc, folgender Eintrag hinzugefügt werden:
XX set NISNODE = ypwhich source/host/$NISNODE/user/setup/mentor/cshrc
XX

Der obige Eintrag im Setup-File eines Anwenders führt also zur Aktivierung eines systemweit einheitlichen Setup-Files, das jeweils in den Slaverechnern vorhanden ist. Die Variable $NISNODE gewährleistet, daß das Setup-File .cshrc unabhängig vom momentan als Server aktiven Slaverechner immer erreicht wird. Mit dem erfindungsgemäßen Setup-Mechanismus ist sichergestellt, daß für ein Benutzerprogramm technisch wichtige Einstellungen konsistent für alle Benutzer des Benutzerprogramms gehalten werden und zwar unabhängig vom Computer und von der Netzstruktur. Zum Einrichten eines netzweiten Setup-Files für ein Benutzerprogramm im Master-Direktory kann jeder für ein Benutzerprogramm Verantwortliche bei der Systemadministration ein Sub-Direktory des Master-Direktories beantragen. Dieses Sub-Direktory wird dann dem Antragsteller mit folgenden Schreib-/Leserechten zugewiesen:
drwxr-xr-x wht lib mentor

Aufgrund obiger Zuweisung ist nur der Verantwortliche eines Benutzerprogramms berechtigt, Änderungen in dem Sub-Direktory vorzunehmen. Das Sub-Direktory kann jedoch von jedem Benutzer des Benutzerprogramms gelesen werden.

Die persönlichen Setup-Files .cshrc und .login im Home-Direktory eines Benutzers sind von den gleichnamigen Setup-Files im Master-Direktory zu unterscheiden.

Gemäß dem erfindungsgemäßen Setup-Mechanismus wird in den persönlichen (benutzerspezifischen) Setup-Files im Home-Direktory nunmehr auf die systemweit einheitlichen Setup-Files im Master-Direktory verwiesen, so daß die benutzerspezifischen Setup-Files nunmehr neben Sicherheitsabfragen (z.B. bezüglich der Existenz von aufgerufenen Objekten), lediglich zum einen die systemweit einheitlichen Setup-Files im Master-Direktory aktivieren und zum anderen eventuell weitere benutzerspezifische Setup-Kommandos bzw. Files.

Aufgrund des erfindungsgemäßen Setup-Mechanismus arbeiten somit alle Benutzer mit den gleichen netzweit einheitlichen Setup-Files .login und .cshrc, die ständig aufdatiert werden. Die persönlichen Setup-Files der Benutzer bedürfen somit keinerlei Modifikationen mehr, auch wenn das netzweite Setup eines oder mehrerer Benutzerprogramme geändert wird.

Templates für die beiden persönlichen Files eines Benutzers, die zur freien persönlichen Konfiguration des Benutzers dienen, liegen unter dem Master-Direktory und heißen user_log-in_template bzw. user_cshrc_template. Persönliche Ergänzungen des Setups werden durch die Files .my_own_login beziehungsweise .my_own_cshrc im Home-Direktory vorgenommen. Diese persönlichen Ergänzungen werden automatisch aktiviert, wenn sie existieren.

Eine weitere Datei im Home-Direktory, nämlich das File .tools, dient dazu, die Setups für die einem Benutzer zur Verfügung gestellten Benutzerprogramme (tools) zu selektieren. Die Datei .tools enthält zeilenweise Einträge für alle gewünschten Benutzerprogramme. Das für das Betriebssystem erforderliche Setup "System" wird in jedem Fall aktiviert, so daß es nicht in der Datei .tools aufgeführt sein muß. Die Existenz von .tools ist somit optional.

Durch das Anlegen eines weiteren Files, des sogenannten Stop-Files ".measage", im Home-Direktory mittels "touch" wird die Ausgabe zusätzlicher Debug-Meldungen beim Durchlaufen des Setups bewirkt.

Im folgenden wird das Master-Direktory und seine Verteilung im Rechnernetz nochmals näher erläutert.

Das Master-Direktory, also das Direktory /user/setup, ist der Master für alle im Rechnernetz vorhandenen Anwenderprogrammen/Objekte, für die ein Setup-Mechanismus benötigt wird. Für jedes durch den Setup-Mechanismus unterstützte Benutzerprogramm (tool) enthält es ein Sub-Direktory. Ein Sub-Direktory enthält wiederum alles, was für das direkte Setup des jeweiligen Benutzerprogramms notwendig ist. Für die Benutzerprogramme Mentor und Synopsis sind beispielsweise die beiden Files .login und .cshrc notwendig, die, wie bereits erwähnt, von dem persönlichen Setup-File eines Benutzers nach dessen Anmeldung beim System aktiviert werden. Der Name dieser Setup-Files und ihr Ablageort sind fest, während ihr Inhalt und ihre Funktionalität von der Tool-Gruppe bestimmt wird. Notwendige Änderungen im Setup für ein bestimmtes Tool (z.B. bei Versionswechsel) müssen von der Tool-Gruppe im Master-Direktory (/user/setup/<tool>) vorgenommen werden, um sie allen Benutzern dieses Tools im Rechnernetz zur Verfügung zu stellen. Das Master-Direktory wird, wie bereits erwähnt, auf Anforderung bzw. turnusgemäß einmal täglich auf alle Slave-Rechner verteilt. Auf diese Kopien greifen die einzelnen Besitzer vor ihrer Arbeit mit einem Benutzerprogramm zu. Die personenbezogene Zuständigkeit für die Tool-Sub-Direktories ist implizit durch ihre Besitzer- und Gruppen-Attribute festgelegt.

Im Master-Direktory befindet sich die Datei used_vars. Diese Datei verzeichnet und beschreibt alle Schell-Variablen, die für das Setup von den einzelnen Tool-Gruppen verwendet werden. Jede Tool-Gruppe muß dort ihre Variablen eintragen, damit die Eindeutigkeit sichergestellt und keine Konflikte durch Doppelverwendung entstehen können. Von besonderer Bedeutung sind vor allem die drei folgenden Variablen aus dem Bereich "System":
- message:: wird von dem im Home-Direktory abgelegten File .cshrc gesetzt, wenn Testmeldungen erscheinen sollen;
- YP:: zeigt den zuständigen Slave-Rechner an;
- Setup_DIR:: zeigt auf das aktive Setup-Direktory auf dem Slave-Rechner.

Zur Aktivierung des erfindungsgemäßen Setup-Mechanismusses muß ein Benutzer im einzelnen folgenden Schritte vollziehen:
- kopieren der Template-Files aus dem Master-Direktory an die entsprechenden Stellen in seinem Home-Direktory,
- editieren der Datei tools im Home-Direktory, um das richtige tool zu aktivieren,
- eventuell Erzeugen von persönlichen Setup-Files .myownlogin, .myowncshrc, ...
- testen, ob alles funktioniert (durch touch message wird im Home-Direktory ein Stub-File angelegt, das die Ausgabe zusätzlicher Debug-Meldungen beim Durchlaufen des Setups bewirkt).

Damit die performance der Setup-Routinen zufriedenstellend ist, sollten möglichst viele Settings über die Datei .login (und nicht über die Datei .cshrc) durchgeführt werden, da in .login Einstellungen für die gesamte Session am Rechner einmalig vorgenommen werden, während das File .cshrc jedes Mal beim Öffnen einer Shell durchlaufen und interpretiert wird.

## Patentansprüche

1. Setup-Verfahren für Benutzerprogramme in einem Rechnernetz, demgemäß
a)von einem Masterrechner benutzerprogrammspezifische Setup-Files netzweit aktualisiert werden, indem sie auf Slave-Rechner kopiert werden,
b)von einem Benutzer-Rechner bei jedem Anmeldevorgang eines Benutzers ein für jedes Benutzerprogramm im Home-Direktory eines Benutzers vorhandenes lokales Setup-File abgearbeitet wird, das einen Aufruf an einen Slaverechner zur Anforderung und Aktivierung eines netzweit einheitlichen Setup-Files enthält.

2. Setup-System für Benutzerprogramme in einem Rechnernetz, mit
a) einem Masterrechner, der benutzerprogrammspezifische Setup-Files netzweit aktualisiert, indem er sie auf Slave-Rechner kopiert,
b) Benutzer-Rechnern, die im Home-Direktory eines Benutzers für jedes Benutzerprogramm ein lokales Setup-File führen, das das zugehörige netzweit einheitliche Setup-File bei jedem Anmeldevorgang eines Benutzers an einem Benutzer-Rechner vom Slave-Rechner anfordert und aktiviert.

3. Benutzer-Rechner in einem Rechnernetz, mit
einem für jedes Benutzerprogramm vorhandenen lokalen Setup-File im Home-Direktory eines Benutzers, das der Rechner bei jedem Anmeldevorgang des Benutzers abarbeitet und das einen Aufruf an einen Slaverechner zur Anforderung und Aktivierung eines netzweit einheitlichen Setup-Files enthält.

## Claims

1. Set-up method for user programs in a computer network, according to which
a) set-up files specific to user programs are updated on a net-wide basis by a Master computer in that said files are copied onto Slave computers,
b) each time a user logs in, a local set-up file which is present in the home directory of a user for each user program is executed by a User computer, the said set-up file containing a call to a Slave computer in order to request and activate a net-wide standardized set-up file.

2. Set-up system for user programs in a computer network, having
a) a Master computer, which updates set-up files specific to user programs on a net-wide basis, in that it copies said files onto Slave computers,
b) User computers which, in the home directory of a user, manage a local set-up file for each user program, which requests the applicable net-wide standardized set-up file from the Slave computer, and activates it, each time a user logs in at a User computer.

3. User computer in a computer network, having a local set-up file, which is present for each user program in the home directory of a user, is executed by the computer each time the user logs in and which contains a call to a Slave computer in order to request and activate a net-wide standardized set-up file.

## Revendications

1. Procédé de configuration pour des programmes d'utilisateurs dans un réseau d'utilisateurs, suivant lequel
a) des fichiers de configuration spécifiques aux programmes d'utilisateurs sont mis à jour au niveau du réseau par un ordinateur maître en les copiant sur des ordinateurs esclaves,
b) un fichier de configuration local présent pour chaque programme d'utilisateur dans le répertoire personnel d'un utilisateur est traité par un ordinateur d'utilisateur à chaque opération d'abonnement d'un utilisateur, ce fichier de configuration contenant un appel à un ordinateur esclave en vue de la demande et de l'activation d'un fichier de configuration unitaire au niveau du réseau.

2. Système de configuration pour des programmes d'utilisateurs dans un réseau d'ordinateurs, comportant
a) un ordinateur maître, qui met à jour au niveau du réseau des fichiers de configuration spécifiques aux programmes d'utilisateurs en les copiant sur des ordinateurs esclaves,
b) des ordinateurs d'utilisateurs qui amènent dans le répertoire personnel d'un utilisateur, pour chaque programme d'utilisateur, un fichier de configuration local, qui demande à l'ordinateur esclave et active le fichier de configuration associé unitaire au niveau du réseau, lors de chaque opération d'abonnement d'un utilisateur à un ordinateur d'utilisateur.

3. Ordinateur d'utilisateur dans un réseau d'ordinateurs, comportant dans le répertoire personnel d'un utilisateur un fichier de configuration local, présent pour chaque programme d'utilisateur, que l'ordinateur traite à chaque opération d'abonnement de l'utilisateur et qui contient un appel à un ordinateur esclave en vue de la demande et de l'activation d'un fichier de configuration unitaire au niveau du réseau.
